# EUROPÄISCHE PATENTANMELDUNG

(11) **EP 1 454 912 A1**
(43) Veröffentlichungstag der Anmeldung: **08.09.2004**
(21) Anmeldenummer: 04004106.3
(22) Anmeldetag: 24.02.2004
(51) Int. Cl.: C07F 9/30, C08K 5/5313

(54) **Schmelzbare Zinkphosphinate**

(30) Priorität: 04.03.2003 DE 10309622
(71) Anmelder: Clariant GmbH, 65929 Frankfurt am Main (DE)
(72) Erfinder: Sicken, Martin, Dr., 51149 Köln (DE); Schlosser, Elke, Dr., 86163 Augsburg (DE); Wanzke, Wolfgang, Dr., 86161 Augsburg (DE); Burghardt, Detlef, 56340 Osterspai (DE)
(74) Vertreter: Paczkowski, Marcus, Dr.

(57) **Zusammenfassung**

Die Erfindung betrifft neue schmelzbare Zinkphosphinate der Formel (I) und/oder deren Polymere, 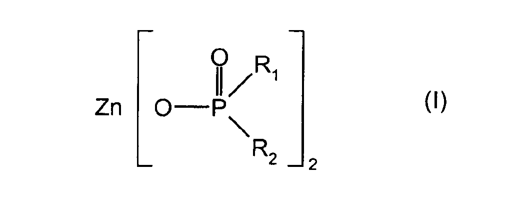 worin R¹, R² gleich oder verschieden sind und Wasserstoff, C₁-C₆-Alkyl, linear oder verzweigt und/oder Aryl bedeuten, dadurch gekennzeichnet dass sie einen Schmelzpunkt unterhalb von 250°C besitzen.

Die Erfindung betrifft weiterhin Verfahren zur Herstellung dieser Zinkphosphinate sowie deren Verwendung als Flammschutzmittel in thermoplastischen Kunststoffen und daraus hergestellten Formkörper, -Filmen, -Fäden -Fasern, -Geweben und -Gestricken.

## Beschreibung

Die vorliegende Erfindung betrifft schmelzbare phosphororganische Flammschutzmittel auf Basis von Zinkphosphinaten, ihre Herstellung und Verwendung.

Wegen ihrer Brennbarkeit benötigen thermoplastische und duroplastische Kunststoffe, wie beispielsweise Polyamide, Polyester, ungesättigte Polyesterharze, Epoxidharze und Polyurethane für einige Anwendungen Flammschutzmittel. Zunehmende Anforderungen des Marktes an den Brandschutz und an die Umweltfreundlichkeit von Produkten erhöhen dabei insbesondere das Interesse an halogenfreien Flammschutzmitteln, wie z.B. festen phosphororganischen Produkten.

Für thermoplastische und duroplastische Polymere haben sich die Salze von Phosphinsäuren (Phosphinate) als wirksame flammhemmende Zusätze erwiesen, dies gilt sowohl für die Alkalimetallsalze (DE 2 252 258 A1) als auch für die Salze anderer Metalle (DE 2 447 727 A1).

Calcium- und Aluminiumphosphinate sind in Polyestern als besonders wirksam beschrieben worden (EP 0 699 708 A1). Darüber hinaus sind Phosphinsäuren und deren Salze nach verschiedenen Methoden herstellbar und in großem Umfang beschrieben worden.

In den vorgenannten Anwendungsgebieten ist die Verwendung dieser Phosphinate aufgrund der Tatsache limitiert, dass es sich um Feststoffe handelt, die bei den üblichen Verarbeitungsbedingungen nicht aufschmelzen. Dies führt dazu, dass die homogene Einarbeitung erschwert ist und dass Anwendungen in dünnwandigen Artikeln, wie Filmen, Folien und Fasern oder solchen Formkörpern, die stellenweise aus dünnwandigen Teilen bestehen, nicht möglich bzw. stark limitiert sind. Beispielsweise können die Verarbeitungsmaschinen (z.B. Düsen, Extrusionsschlitze, Filter, Rohrleitungen, Pumpen) verstopfen oder die Formausfüllung der Verarbeitungsmaschinen ist aufgrund der Feststoffeigenschaften (nicht genügend fließfähig, nicht schmelzbar) nicht vollständig möglich.

Ein weiterer Nachteil der unschmelzbaren Phosphinate besteht darin, dass sie nicht in transparenten Endartikeln eingesetzt werden können.

Es bestand somit die Aufgabe, Flammschutzmittel zur Verfügung zu stellen, die halogenfrei sind, hohe Flammschutzeffizienz aufweisen, sich gut homogenisieren lassen und auch in dünnwandigen Artikeln, wie Filmen, Folien und Fasern oder solchen Formkörpern, die stellenweise aus dünnwandigen Teilen bestehen, eingesetzt werden können und auch transparente Anwendungen zulassen.

Erfindungsgemäß wird die Aufgabe gelöst, indem bestimmte Zinkphosphinate eingesetzt werden. Überraschenderweise wurde gefunden, dass bestimmte Zinkphosphinate im Gegensatz zu den bislang favorisierten Phosphinaten unterhalb der Verarbeitungstemperaturen von thermoplastischen Kunststoffen aufschmelzen. Sie werden deshalb gleichmäßiger im Polymer verteilt und erhalten damit die Transparenz der Materialien, soweit diese bereits vorher vorhanden war. Weiterhin können sie auch in dünnwandigen Artikeln, wie Filmen, Folien, Fäden und Fasern oder solchen Formkörpern, die stellenweise aus dünnwandigen Teilen bestehen, eingesetzt werden.

Weiterhin wurde überraschend gefunden, dass auch der Flammschutzeffekt dieser Zinkphosphinate in derartigen Anwendungen gegenüber den in der EP-A-0 699 708 favorisierten Calcium- und Aluminiumphosphinaten verbessert ist. Weitere Resultate der besseren Homogenisierung der erfindungsgemäßen schmelzbaren Phosphinate sind eine bessere und ästhetischere Oberflächenbeschaffenheit und Oberflächengüte. Außerdem können so auch bessere mechanische Eigenschaften des polymeren Werkstoffes erzielt werden.

Gegenstand der Erfindung sind daher Zinkphosphinate der Formel (I) und/oder deren Polymere, 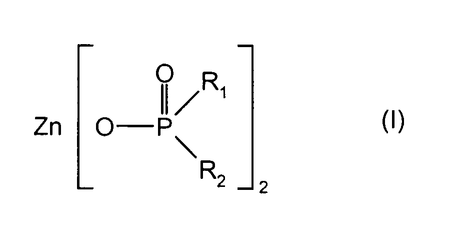 worin R¹, R² gleich oder verschieden sind und Wasserstoff, C₁-C₆-Alkyl, linear oder verzweigt und/oder Aryl bedeuten, dadurch gekennzeichnet dass sie einen Schmelzpunkt unterhalb 250°C besitzen.
Der untere Wert für den Schmelzpunkt liegt bei etwa 40°C oder geringfügig höher.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Besonders bevorzugt handelt es sich bei dem Zinkphosphinat um Dimethylphosphinsäure-Zinksalz, Methylethylphosphinsäure-Zinksalz und Diethylphosphinsäure-Zinksalz.

Die Erfindung betrifft auch die Herstellung der erfindungsgemäßen Zinkphosphinate.

Die Herstellung erfolgt durch Umsetzung von Phosphinsäuren und/oder deren Salzen mit Zinkverbindungen.

Bevorzugt werden als Zinkverbindungen Zinkchlorid, Zinksulfat, Zinkacetat, Zinknitrat, Zinkoxid, Zinkhydroxid, Zinkcarbonat, Zinkhydroxidacetate und Zinkhydroxidcarbonate eingesetzt.

Besonders bevorzugt werden als Zinkverbindungen Zinkoxid und Zinksulfat eingesetzt.

Bevorzugt werden als Phosphinsäuren Dimethylphosphinsäure, Methylethylphosphinsäure und Diethylphosphinsäure eingesetzt. Bevorzugt werden als Phosphinsäure-Salze Dimethylphosphinsäure-Natriumsalz, Methylethylphosphinsäure-Natriumsalz und Diethylphosphinsäure-Natriumsalz eingesetzt.

Bevorzugt erfolgt die Herstellung der erfindungsgemäßen Zinkphosphinate in Wasser oder Essigsäure. Besonders geeignet ist Eisessig.

In einer besonderen Ausführungsform des Verfahrens wird die Phosphinsäure mit Zinkoxid in Essigsäure umgesetzt und anschließend durch Vakuumtrocknung kristallisiert.

In einer weiteren besonderen Ausführungsform des Verfahrens wird das Phosphinsäure-Natriumsalz mit Zinksulfat in Wasser umgesetzt und anschließend durch Filtration, Waschung und Vakuumtrocknung isoliert.

Die Erfindung betrifft auch eine flammwidrig ausgerüstete thermoplastische Kunststoff-Formmasse, hergestellt durch Einsatz der erfindungsgemäßen Zinkphosphinate.

Bevorzugt handelt es sich bei dem thermoplastischen Kunststoff um Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe.

Besonders bevorzugt handelt es sich bei dem thermoplastischen Kunststoff um Polyamide, Polyester und PPE/HIPS-Blends.

Bevorzugt enthalten die thermoplastischen Formmassen das Zinkphosphinat in einer Menge von 1 bis 50 Gew.-%.

Besonders bevorzugt enthalten die thermoplastischen Formmassen das Zinkphosphinat in einer Menge von 1 bis 25 Gew.-%.

Bevorzugte enthalten die Kunststoffe weitere Additive, wie Synergisten, Antioxidantien, Lichtschutzmittel, Gleitmittel, Farbmittel, Nukleierungsmittel, Füllstoffe oder Antistatika. Beispiele für die verwendbaren Zusätze sind in EP 0 584 567 A1 angegeben.

Die Phosphinate können in thermoplastische Polymere eingearbeitet werden, indem z. B. alle Bestandteile als Pulver und/oder Granulat in einem Mischer vorgemischt und anschließend in einem Compoundieraggregat (z. B. einem Doppelschneckenextruder) in der Polymerschmelze homogenisiert werden. Die Schmelze wird üblicherweise als Strang abgezogen, gekühlt und granuliert. Die Komponenten können auch separat über eine Dosieranlage direkt in das Compoundieraggregat eingebracht werden.

Es ist ebenso möglich, die flammhemmenden Zusätze einem fertigen Polymergranulat bzw. -pulver beizumischen und die Mischung direkt auf einer Spritzgussmaschine zu Formteilen zu verarbeiten.

Die Erfindung betrifft auch flammwidrig ausgerüstete Polymer-Formkörper, -Filme,-Fäden und -Fasern, -Gewebe und -Gestricke, dadurch gekennzeichnet, dass das Zinkphosphinat in einer Menge von 1 bis 50 Gew.-%, bezogen auf den Polymergehalt, enthalten ist.

Bevorzugt enthalten die Polymer-Formkörper, -Filme, -Fäden und -Fasern, -Gewebe und -Gestricke Polymere vom Typ Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt.

Als universell einsetzbare Möglichkeit, die Flammwidrigkeit von Werkstoffen zu bestimmen hat sich die Bestimmung des sogenannten Sauerstoffindexes bewährt. In dieser Testanordnung wird anhand eines vertikal angeordneten Prüfkörpers die Grenz-Sauerstoffkonzentration eines vertikal verlaufenden Abbrandes ermittelt. Der Sauerstoffindex wurde in einer modifizierten Apparatur in Anlehnung an ASTM_D 2863-74 bestimmt.

### Beispiele

### Beispiel 1 (erfindungsgemäß)

In einem 25 I-Rührreaktor wurden 4 L Wasser vorgelegt. Es wurde auf ca. 70°C erwärmt und anschließend über einen Zeitraum von 2 h gleichzeitig eine Lösung von 2,2 kg ZnSO₄·7H₂O (7,65 Mol) in 2,8 kg Wasser und 10 kg einer 22 %igen Lösung von Diethylphosphinsäure-Natriumsalz (15,3 Mol) zudosiert. Nach 30 min Nachreaktionszeit wurde die erhaltene Maische filtriert, mit 10 l heißem Wasser gewaschen und bei 130°C vakuumgetrocknet. Man erhielt so 2 kg Diethylphosphinsäure-Zinksalz (85 % d.Th.) in Form eines weißen Pulvers. Der Schmelzpunkt beträgt 209°C.

### Beispiel 2 (erfindungsgemäß)

In einem 4 l-Rührreaktor wurden 1,08 kg Methylethylphosphinsäure (10 Mol) und 407 g (5 Mol) Zinkoxid in 1,2 kg Essigsäure 2 h auf 100°C erhitzt, wobei eine klare Lösung entstand. Anschließend wurde die Essigsäure abdestilliert und die zähe Reaktionsmasse im Vakuum bei 130°C getrocknet und kristallisiert. Nach Aufmahlung erhielt man so 1,4 kg Methylethylphosphinsäure-Zinksalz (100 % d.Th.) in Form eines weißen Pulvers. Der Schmelzpunkt beträgt 205°C.

### Beispiele 3 bis 5 (Vergleichsbeispiele)

Entsprechend der Vorschrift gemäß Beispiel 2 wurden aus den entsprechenden Hydroxiden die Calcium-, Barium- und Magnesiumsalze der Methylethylphosphinsäure hergestellt und feingemahlen.

### Beispiel 6 (Vergleichsbeispiel)

Entsprechend der Vorschrift gemäß Beispiel 1 wurde aus Aluminiumsulfat das ALuminiumsalz der Methylethylphosphinsäure hergestell und feingemahlen.

### Beispiel 7 (Vergleichsbeispiel)

Entsprechend der Vorschrift gemäß Beispiel 1 wurde aus Aluminiumsulfat das Aluminiumsalz der Diethylphosphinsäure hergestellt und feingemahlen.

**Tabelle 1:**

| Schmelzpunkte von Phosphinsäuresalzen | | | |
|---|---|---|---|
| Beispiel | Metall | Phosphinsäure | Schmelzpunkt [°C] |
| Beispiel 1 | Zn | Diethylphosphinsäure | 209 |
| Beispiel 2 | Zn | Methylethylphosphinsäure | 205 |
| Beispiel 3 | Ca | Methylethylphosphinsäure | > 350 (Zers.) |
| Beispiel 4 | Ba | Methylethylphosphinsäure | > 350 (Zers.) |
| Beispiel 5 | Mg | Methylethylphosphinsäure | > 350 (Zers.) |
| Beispiel 6 | Al | Methylethylphosphinsäure | > 350 (Zers.) |
| Beispiel 7 | Al | Diethylphosphinsäure | > 350 (Zers.) |

### Beispiele 8 und 9 (mit erfindungsgemäßen Phosphinsäuresalzen) und 10 bis 15 (Vergleich)

Herstellung von Garnen und Gestricken: Die Phosphinate gemäß der Beispiele 1 bis 7 wurden im Verhältnis 1:1 mit einem gemahlenen PBT-Trägermaterial (® ULTRADUR B2550, Fa. BASF) gut gemischt und mit Hilfe eines Doppelschneckenextruders (Typ Maris DSE 30) bei 250°C aufgeschmolzen, homogenisiert, zu Strängen gepresst, abgekühlt und granuliert. Die so hergestellten Masterbatch-Konzentrate wurden zu 5 Gew.-% mit Polyethylenterephthalat-Granulat vom Typ ® Trevira RT 20 (95 %) gemischt, mittels einer modifizierten Kleinspinnanlage (Firma Fourne Maschinenbau GmbH) bei 285°C zu POY-Garnen versponnen und über high-speed winder mit 3000 m/min aufgewickelt. In einem weiteren Schritt erfolgte auf einer ® RETECH TEX 2000 die Friktionstexturierung bei einem Verstreckverhältnis 1:1,6 zu DTY-Garnen mit einem Gesamttiter 158 dtex und 48 Filamenten. Mittels dieser DTY-Garne wurden die zur Testung und Beurteilung der Effekte notwendigen Gestricke über eine Rundstrickmaschine Modell TK 83, Fa. Harry Lucas angefertigt, so dass Polyester-Strickschläuche erhalten wurden.

Es wurden bei der Verarbeitung als Praxis relevante Kriterien die Filterwerte der Masterbatch-Konzentrate, die Spinntestresultate sowie die Sauerstoffindizes ermittelt.

**Tabelle 2:**

| Eigenschaften der Polyester-Strickschläuche mit 2,5 % Phosphinat-Gehalt | | | | |
|---|---|---|---|---|
| Beispiel | Phosphinat aus | Filterwert ¹ | Sauerstoffindex | Spinntest ² |
| Beispiel 8 | Beispiel 1 | 0,01 | 0.45 | 0,2 |
| Beispiel 9 | Beispiel 2 | 0,01 | 0.44 | 0,3 |
| Beispiel 10 | Beispiel 3 | 1,39 | 0.33 | 2,1 |
| Beispiel 11 | Beispiel 4 | 4,53 | 0.31 | 5,3 |
| Beispiel 12 | Beispiel 5 | 3,21 | 0.32 | 4,8 |
| Beispiel 13 | Beispiel 6 | 2,83 | 0.35 | 4,2 |
| Beispiel 14 | Beispiel 7 | 2,90 | 0.35 | 4,2 |
| Beispiel 15 | - | 0,00 | 0.32 | 0,0 |

| | | | | |
|---|---|---|---|---|
| ¹ : Die Filterwerte (bar/g Phosphinat) als Kriterium für Teilchengröße, Aggregate und Agglomerate, wurden nach einer Standard-Prüfmethode (entwickelt für die Testung von Farbstoff- und Pigmentkonzentraten speziell für die Spinnfärbung im Faser- und Filamentsektor) an den Masterbatch-Konzentraten geprüft. Erfahrungsgemäß liegen die Praxis relevanten Obergrenzen hier bei 0,2 bar/g. | | | | |
| ² : Für den Spinntest als Kriterium für die Verteilung der Phosphinate in der Polymermatrix werden Fördermenge/Polymerdurchsatz, Düsenlochanzahl und Abzugsgeschwindigkeit extrem variiert, so dass ein Einzelfilament-Endtiter von ca. 1 dtex (Mikrofaserbereich) resultiert. Gemessen werden die Filamentbrüche pro Zeiteinheit. Hier liegt die Praxis relevante Toleranzgrenze bei kleiner/gleich (</=) 0,6/20 min. | | | | |

Die hohen Sauerstoffindices der Zinkphosphinat enthaltenden Strickschläuche zeigen, dass die Flammschutzwirkung gegenüber anderen Phosphinaten überlegen ist.

Die damit hergestellten Gestricke haben eine zum Beispiel 15 vergleichbare Transparenz, einen weichen Warenausfall und -griff.

Die Muster aus Beispiel 10 bis 14 dagegen wirken stumpf, haben einen unangenehm sandigen Griff und eine hohe Steifigkeit.

### Beispiele 16 bis 23 (Herstellung von Folien)

Die Phosphinate gemäß der Beispiele 1 bis 7 wurden auf einem DoppelschneckenExtruder (Typ Leistritz LSM 30/34) bei einer Temperatur von 260°C in einer Menge von 20 Gew.-% in Polybutylenterephthalat (® Celanex 2002, Fa. Ticona) eingearbeitet. Der homogenisierte Polymerstrang wurde abgezogen, im Wasserbad gekühlt und anschließend granuliert. Nach ausreichender Trocknung wurden die Formmassen mittels eines Walzwerkes vom Typ Collin W 150 M zu Folien von 0,1 mm Stärke weiterverarbeitet und der Sauerstoffindex bestimmt sowie eine visuelle Beurteilung vorgenommen.

**Tabelle 3:**

| Eigenschaften der Polyesterfolien mit 20 %igem Phosphinat-Gehalt | | | | |
|---|---|---|---|---|
| Beispiel | Phosphinat | Transparenz | Oberfläche | Sauerstoffindex |
| Beispiel 16 | Beispiel 1 | Ja | glatt | 0,32 |
| Beispiel 17 | Beispiel 2 | Ja | glatt | 0,31 |
| Beispiel 18 | Beispiel 3 | Nein | leicht rau | 0,26 |
| Beispiel 19 | Beispiel 4 | Nein | leicht rau | 0,23 |
| Beispiel 20 | Beispiel 5 | Nein | leicht rau | 0,25 |
| Beispiel 21 | Beispiel 6 | Nein | leicht rau | 0,27 |
| Beispiel 22 | Beispiel 7 | Nein | leicht rau | 0,26 |
| Beispiel 23 | - | ja | glatt | 0,20 |

Die höheren Sauerstoffindices der Zinkphosphinat enthaltenden Folien zeigen, dass die Flammschutzwirkung gegenüber anderen Phosphinaten erhöht ist. Die visuelle Betrachtung der Folien zeigt die deutlichen Vorteile der aufschmelzenden Zinkphosphinate wie Transparenz und homogene Verteilung

## Patentansprüche

1. Zinkphosphinate der Formel (I) und/oder deren Polymere, 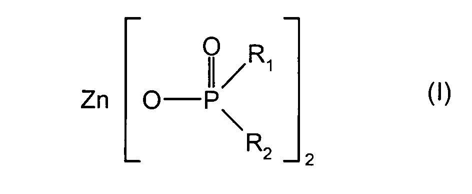 worin R¹, R² gleich oder verschieden sind und Wasserstoff, C₁-C₆-Alkyl, linear oder verzweigt und/oder Aryl bedeuten, **dadurch gekennzeichnet dass** sie einen Schmelzpunkt unterhalb 250°C besitzen.

2. Zinkphosphinat nach Anspruch 1, **dadurch gekennzeichnet, dass** R¹, R² gleich oder verschieden sind und C₁-C₆-Alkyl, linear oder verzweigt und/oder Phenyl bedeuten.

3. Zinkphosphinat nach Anspruch 1 oder 2, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

4. Zinkphosphinat nach einem oder mehreren der Ansprüche 1 bis 3, **dadurch gekennzeichnet, dass** es sich um Dimethylphosphinsäure-Zinksalz, Methylethylphosphinsäure-Zinksalz und Diethylphosphinsäure-Zinksalz handelt

5. Verfahren zur Herstellung der Zinkphosphinate gemäß einem oder mehreren der Ansprüche 1 bis 4, **dadurch gekennzeichnet, dass** Phosphinsäuren und/oder deren Salze mit den Zinkverbindungen Zinkchlorid, Zinksulfat, Zinkacetat, Zinknitrat, Zinkoxid, Zinkhydroxid, Zinkcarbonat, Zinkhydroxidacetate oder Zinkhydroxidcarbonate zu den Zinkphosphinaten umgesetzt werden.

6. Verfahren zur Herstellung der Zinkphosphinate nach Anspruch 5, **dadurch gekennzeichnet, dass** als Phosphinsäure Dimethylphosphinsäure, Methylethylphosphinsäure oder Diethylphosphinsäure eingesetzt werden.

7. Verfahren zur Herstellung der Zinkphosphinate nach Anspruch 5, **dadurch gekennzeichnet, dass** als Phosphinsäuresalze Dimethylphosphinsäure-Natriumsalz, Methylethylphosphinsäure-Natriumsalz oder Diethylphosphinsäure-Natriumsalz eingesetzt werden.

8. Verfahren zur Herstellung der Zinkphosphinate nach Anspruch 5, **dadurch gekennzeichnet, dass** die Herstellung der Zinkphosphinate in Wasser oder Essigsäure erfolgt.

9. Verfahren zur Herstellung der Zinkphosphinate nach Anspruch 5, **dadurch gekennzeichnet, dass** Phosphinsäure mit Zinkoxid in Essigsäure umgesetzt und anschließend durch Vakuumtrocknung kristallisiert wird.

10. Verfahren zur Herstellung der Zinkphosphinate nach Anspruch 5, **dadurch gekennzeichnet, dass** Phosphinsäure-Natriumsalz mit Zinksulfat in Wasser umgesetzt und anschließend durch Filtration, Waschung und Vakuumtrocknung isoliert wird.

11. Flammwidrig ausgerüstete thermoplastische Kunststoff-Formmasse, enthaltend ein Zinkphosphinat gemäß einem oder mehreren der Ansprüche 1 bis 4.

12. Flammwidrig ausgerüstete thermoplastische Kunststoff-Formmasse nach Anspruch 11, **dadurch gekennzeichnet, dass** es sich bei dem thermoplastischen Kunststoff um Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe handelt.

13. Flammwidrig ausgerüstete thermoplastische Kunststoff-Formmasse nach Anspruch 11 oder 12, **dadurch gekennzeichnet, dass** es sich bei dem thermoplastischen Kunststoff um Polyamide, Polyester und PPE/HIPS-Blends handelt.

14. Flammwidrig ausgerüstete thermoplastische Kunststoff-Formmasse nach einem oder mehreren der Ansprüche 11 bis 13, **dadurch gekennzeichnet, dass** das Zinkphosphinat in einer Menge von 1 bis 50 Gew.-% enthalten ist.

15. Flammwidrig ausgerüstete thermoplastische Kunststoff-Formmasse nach einem oder mehreren der Ansprüche 11 bis 14, **dadurch gekennzeichnet, dass** das Zinkphosphinat in einer Menge von 1 bis 25 Gew.-% enthalten ist.

16. Polymer-Formkörper, -Filme, -Fäden -Fasern, -Gewebe und -Gestricke, enthaltend ein Zinkphosphinat gemäß einem oder mehreren der Ansprüche 1 bis 4.

17. Polymer-Formkörper, -Filme, -Fäden -Fasern, -Gewebe und -Gestricke, nach Anspruch 16, **dadurch gekennzeichnet, dass** es sich bei dem Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt.

18. Polymer-Formkörper, -Filme, -Fäden -Fasern, -Gewebe und -Gestricke, nach Anspruch 16 oder 17, **dadurch gekennzeichnet, dass** es sich bei dem Polymeren um Polyamide oder Polyester handelt.

19. Polymer-Formkörper, -Filme, -Fäden -Fasern, -Gewebe und -Gestricke, nach einem oder mehreren der Ansprüche 16 - 18, **dadurch gekennzeichnet, dass** das Zinkphosphinat in einer Menge von 1 bis 50 Gew.-%, bezogen auf den Polymergehalt, enthalten ist.
